(19) Europäisches Patentamt

European Patent Office

Office européen des brevets

(11) **EP 0 691 523 B1**

(12) **EUROPÄISCHE PATENTSCHRIFT**

(45) Veröffentlichungstag und Bekanntmachung des Hinweises auf die Patenterteilung:
**17.11.1999   Patentblatt 1999/46**

(51) Int Cl.6: **G01C 17/38**

(21) Anmeldenummer: **95109761.7**

(22) Anmeldetag: **23.06.1995**

(54) **Verfahren zur Bestimmung des Gierwinkels eines Fahrzeuges**

Method for determining the yaw angle of a vehicle

Méthode pour déterminer l'angle de lacet d'un véhicule

(84) Benannte Vertragsstaaten:
**AT BE CH FR GB LI**

(30) Priorität: **07.07.1994   DE 4423845**

(43) Veröffentlichungstag der Anmeldung:
**10.01.1996   Patentblatt 1996/02**

(73) Patentinhaber: **Mannesmann VDO AG
60326 Frankfurt (DE)**

(72) Erfinder: **Hertzner, Alfred, Dr. Dipl.-Phys.
D-78089 Unterkirnach (DE)**

(56) Entgegenhaltungen:
**EP-A- 0 214 817        EP-A- 0 451 839**

- **PATENT ABSTRACTS OF JAPAN vol. 012 no. 413 (P-780) ,2.November 1988 & JP-A-63 150622 (TOKYO KEIKI CO LTD) 23.Juni 1988,**

**Beschreibung**

Die vorliegende Anmeldung bezieht sich auf ein Verfahren zur Bestimmung des Gierwinkels $\psi$ eines Fahrzeugs gemäß dem Oberbegriff des ersten Anspruchs. Dabei lassen sich die Merkmale des Oberbegriffs der japanischen Schrift JP-A-63 150 622 entnehmen, die im Patent Abstracts of Japan Vol. 12. No. 413 (P-780) vom 02.11.1988 veröffentlicht wurde. Diese Schrift offenbart in ihrer Zusammenfassung nebst Abbildung eine in einem Fahrzeug angeordnete Datenerfassungsvorrichtung mit Sensoren zur Erfassung von Beschleunigungsmeßdaten und Winkelmeßdaten in allen drei Raumrichtungen, in die sich das Fahrzeug bewegen mag. Diese Schrift gibt jedoch keinen Hinweis darauf, nach welchem Verfahren die erfaßten Meßdaten ausgewertet werden. In der Schrift EP 451 839 A2 wird zur Bestimmung der Fahrtrichtung eines Fahrzeugs zwar vorgeschlagen, aus den im Fahrzeug sensorisch erfaßten und gespeicherten Erdmagnetfeldmeßdaten und Winkelgeschwindigkeitsmeßdaten deren Durchschnittswerte sowie Varianz zu berechnen und auf deren Grundlage eine Aussage über deren Zuverlässigkeit abzuleiten, jedoch führt ein solches Verfahren nicht wirklich dazu, in der realen Umwelt eines Fahrzeugs erfaßte Meßdaten von überlagerten Störeinflüssen zu befreien.

Somit ist die Erfassung und Registrierung von Beschleunigungswerten ($a_l$, $a_q$) oder Magnetfelddaten ($B_x$, $B_y$) in einem Fahrzeug an sich bekannt. Unter idealen, d.h. störungsfreien Bedingungen könnte man aus den orthogonal zueinander stehenden Komponenten $B_x$ und $B_y$ des Erdmagnetfeldes aus der Beziehung

$$\psi = \arctan(- B_y/B_x)$$

in einfacher Weise den Gierwinkel $\psi$ des Fahrzeugs gegen Norden bestimmen, denn unter idealen Bedingungen lägen alle Meßwerte ($B_x$, $B_y$) in der zweidimensionalen $B_x$-$B_y$-Darstellung auf einer kreisförmigen Kurve.

Bei der Erfassung der Magnetfelddaten überlagern sich jedoch diesen Meßwerten durch Nick- und Wankbewegungen des Fahrzeugs infolge der Inklination des Erdmagnetfeldes Anteile aus der vertikalen Richtung des Erdmagnetfeldvektors und beeinflussen damit die im Fahrzeug durchgeführte Messung. Der daraus resultierende Fehler für den Gierwinkel $\psi$ des Fahrzeugs ist richtungsabhängig.

Die derart im Fahrzeug erfaßten Magnetfelddaten $B_x$ und $B_y$ sind zusätzlich noch weiteren Störeinflüssen unterworfen. So addieren sich zu den gesuchten Erdmagnetfelddaten noch äußere und innere, zeitlich konstante sowie auch zeitlich veränderliche Störfelder. Konkret sind da magnetische Einstreuungen auf das Fahrzeug von außen, Verzerrungen des Erdmagnetfeldes am Meßort, die Magnetisierung von Teilen des Fahrzeugs, in dem die Messung erfolgt, oder, wann immer andere elektrische Fahrzeugaggregate in Betrieb genommen werden, vom Stromfluß herrührende Magnetfelder im Fahrzeug zu nennen. Außerdem beeinflussen Sensorparameter, wie deren Empfindlichkeit und (Temperatur-) Driften sowie eine nicht exakte Orthogonalität in der Anordnung der sensierenden Meßmittel, d.h. z.B. der Spulen, das Meßergebnis.

Der Erfindung liegt nun die Aufgabe zugrunde, ein Verfahren aufzuzeigen, daß trotz der genannten Störeinflüsse auf die in einem Fahrzeug erfaßten Magnetfelddaten ($B_x$, $B_y$) in der Lage ist, den Gierwinkel $\psi$ des Fahrzeugs fehlerfrei zu bestimmen. Insbesondere soll der Einfluß durch Nick- und Wankbewegungen des Fahrzeugs korrigiert werden.

Die Aufgabe wird durch ein Verfahren gelöst, das die relevanten Einflüsse modellhaft beschreibt und in einem einzigen Transformationsschritt kompensiert. Das Verfahren geht davon aus, daß zur Bestimmung des Gierwinkels $\psi$ die Beschleunigungsmeßdaten $a_l$ und $a_q$ sowie die Magnetfeldmeßdaten $B_x$ und $B_y$, die im Fahrzeug nur samt den ihnen überlagerten Störeinflüssen meßbar sind, mittels Sensoren erfaßt und in einem im Fahrzeug installierten Datenerfassungsgerät zur Auswertung gespeichert werden. Da die Nick- und Wankwinkel $\vartheta$ und $\varphi$ des Fahrzeugs nicht bekannt und tatsächlich auch nur schwer fortlaufend zu erfassen sind, wird vorgeschlagen, diese Werte aus den Beschleunigungswerten $a_l$ und $a_q$ zu ermitteln und damit indirekt in das insbesondere auch diese Störgrößen kompensierende Korrekturverfahren einzuführen. Wie noch näher ausgeführt wird, läßt sich die gestellte Aufgabe nach Kenntnis der vier zeitgleich erfaßten Meßparameter $B_x$, $B_y$, $a_l$ und $a_q$ lösen.

Die Transformation der gemessenen Magnetfelddaten ($B_x^{UDS}$, $B_y^{UDS}$) auf die von Störeinflüssen bereinigten Daten ($B_x^{ideal}$, $B_y^{ideal}$) erfolgt durch die Anweisung:

$$B_x^{ideal}(t) = p_1 \cdot \left(B_x^{UDS}(t) - p_3\right) + p_2 \cdot \left(B_y^{UDS}(t) - p_7\right) - p_4 \cdot a_l(t)$$

$$B_y^{ideal}(t) = p_5 \cdot \left(B_x^{UDS}(t) - p_3\right) + p_6 \cdot \left(B_y^{UDS}(t) - p_7\right) - p_8 \cdot a_q(t)$$

wobei p1, ..., p8 freie Parameter bezeichnen, die derart bestimmt werden, daß die Kostenfunktion

$$K(p_1, \ldots, p_8) := \sum_{i=1}^{N} K_i(p_1, \ldots, p_8)$$

$$:= \sum_{i=1}^{N} \left( \left\{ B_x^{ideal}[i] \right\}^2 + \left\{ B_y^{ideal}[i] \right\}^2 - 1 \right)^2,$$

mit i=1, ..., N

ein Minimum annimmt. Nach dieser korrigierenden Transformation wird der Gierwinkel $\psi$ aus den bereinigten Magnetfelddaten $B_x^{ideal}$ und $B_y^{ideal}$, die mit den derart bestimmten Parametern p1, ..., p8 ermittelt wurden, durch Anwendung der Beziehung

$$\psi = \arctan(- B_y^{ideal} / B_x^{ideal})$$

ermittelt.

Die 8 freien Parameter p1, ..., p8 sind wie folgt definiert:

$$p_1 = \frac{m_{12}\sin(\beta)}{a\,D} + \frac{m_{11}\cos(\beta)}{a\,D}, \qquad p_2 = \frac{m_{12}\cos(\alpha)}{b\,D} - \frac{m_{11}\sin(\alpha)}{b\,D}$$

$$p_5 = \frac{m_{22}\sin(\beta)}{a\,D} + \frac{m_{12}\cos(\beta)}{a\,D}, \qquad p_6 = \frac{m_{22}\cos(\alpha)}{b\,D} - \frac{m_{12}\sin(\alpha)}{b\,D}$$

$$p_4 = c_\vartheta B_z^0, \qquad p_8 = c_\vartheta B_z^0$$

$$p_1 p_3 + p_2 p_7 =$$

$$- \, m_{11} \left( \frac{a\,\sin(\alpha)\,y\_off \, - b\cos(\beta)\,x\_off}{a\,b\,D} \quad - B_x^{const} \right)$$

$$+ \, m_{12} \left( \frac{a\,\cos(\alpha)\,y\_off \, - b\sin(\beta)\,x\_off}{a\,b\,D} \quad + B_y^{const} \right)$$

$$- \, m_{13} B_z'$$

$$p_3\, p_5 + p_6\, p_7 \quad =$$

$$- \ m_{12}\left(\frac{a\ \sin(\alpha)\ y\_off\ -b\cos(\beta)\, x\_off}{a\ b\ D}\ -B_x^{const}\right)$$

$$+ \ m_{22}\left(\frac{a\ \cos(\alpha)\ y\_off\ -b\sin(\beta)\, x\_off}{a\ b\ D}\ +B_y^{const}\right)$$

$$- \ m_{23}B_z'$$

mit der Abkürzung: $D := \cos(\alpha)\cos(\beta) + \sin(\alpha)\sin(\beta)$.

Die Eigenschaften der Sensoren zur Erfassung der Magnetfelddaten $B_x$ und $B_y$ werden in dieser Parameterdefinition durch folgende Größen beschrieben:

$\alpha$    Fehler der Einbaurichtung des $B_x$-Sensors

$\beta$    Fehler der Einbaurichtung des $B_y$-Sensors

x_off       Nullpunkt des $B_x$-Sensors

y_off       Nullpunkt des $B_y$-Sensors

a    Empfindlichkeit des $B_x$-Sensors

b    Empfindlichkeit des $B_y$-Sensors

Die Parameter $p_4$ und $p_8$ beinhalten die Nick- ($c_\vartheta$) bzw. Wanksteifigkeit ($c_\varphi$) des Fahrzeugs sowie die z-Komponente des äußeren Magnetfeldes $B_z^o$.

Wie bereits erwähnt, werden der Nick- und Wankwinkel $\vartheta$ und $\varphi$ aus der Längsbeschleunigung $a_l$ und der Querbeschleunigung $a_q$ des Fahrzeugs gewonnen, wobei hier ein statisches Nick- und Wankmodell zugrundegelegt wird, was bedeutet, daß Proportionalität zwischen der Längsbeschleunigung $a_l$ und dem Nickwinkel $\vartheta$ sowie zwischen der Querbeschleunigung $a_q$ und dem Wankwinkel $\varphi$ besteht. Einschwingvorgänge bleiben unberücksichtigt. Obwohl es hier nicht näher ausgeführt wird, ist die Erweiterung auf ein dynamisches Modell aber durchaus möglich.

Weitere Vereinfachungen bestehen darin, daß Änderungen der Magnetfelddaten ($B_x^{UDS}$, $B_y^{UDS}$) höherer Ordnung vernachlässigt werden. Wenn sich durch Wanken und Nicken des Fahrzeugs die Hochkomponente, d.h. die z-Richtung, des Magnetfeldes ändert, dann ändern sich auch die im fahrzeugfesten Bezugssystem in x-und y-Richtung induzierten Anteile aufgrund der durch die z-Komponente hervorgerufenen Magnetisierung. Auch dieser Einfluß ist hier bei der grundsätzlichen Erläuterung des Verfahrens vernachlässigt. Das Verfahren kann bedarfsweise jedoch um alle diese Eigenschaften ergänzt werden.

Das vorliegende Verfahren wählt zur Lösung des gestellten Problems einen linearen Ansatz. Im zugrunde liegenden Modell wird davon ausgegangen, daß ein äußeres Feld $B_x$ in x-Richtung eine Magnetisierung in x-Richtung proportional zu $B_x$ und eine Magnetisierung in y-Richtung ebenfalls proportional zu $B_x$ induziert. Analoges geschieht bei einem äußeren Feld $B_y$ in y-Richtung.

Prinzipiell wäre es auch möglich, höhere Anteile, z.B. quadratische und bilineare Anteile, in das Verfahren einzubeziehen. Diesbezügliche Versuche zeigten jedoch keine verbesserten Ergebnisse.

Das dem Verfahren zugrunde liegende Modell läßt sich wie folgt darstellen:

$$\text{Erdmagnetfeld im genordeten Weltsystem} \ = \ \begin{pmatrix} B_x^o \\ 0 \\ B_z^o \end{pmatrix}$$

$$\xrightarrow{\quad T\psi \quad} \begin{pmatrix} B_x^{ideal} \\ B_y^{ideal} \\ B_z^o \end{pmatrix}$$

$$T_\varphi \quad * \quad T\vartheta$$
$$- - - - - \rightarrow \quad \begin{pmatrix} B_x^{Kfz} \\ B_y^{Kfz} \\ B_z^{Kfz} \end{pmatrix}$$

$$\text{Magnetisierung}$$
$$- - - - - - - \rightarrow \quad \begin{pmatrix} B_x' \\ B_y' \\ B_z' \end{pmatrix}$$

$$\text{zeitlich konstantes , inneres B - Feld}$$
$$- - - - - - - - - - - - - - \rightarrow \quad \begin{pmatrix} B_x' + B_x^{const} \\ B_y' + B_y^{const} \\ B_z' + B_z^{const} \end{pmatrix}$$

$$\text{Sensor}$$
$$- - - - \rightarrow \quad \begin{pmatrix} B_x^{UDS} \\ B_y^{UDS} \\ ? \end{pmatrix} = \text{Meßwerte}$$

Die mit "?" angegebene z-Komponente im Vektor

$$\begin{pmatrix} B_x^{UDS} \\ B_y^{UDS} \\ ? \end{pmatrix}$$

wird sensorisch nicht erfaßt.

Ausgehend vom Vektor des Erdmagnetfeldes sind im Modell die Einflüsse der Fahrzeugbewegung, speziell gieren, wanken und nicken, dargestellt. Dann wirken die Magnetisierung des Fahrzeuges sowie andere konstante Störfelder auf den zu messenden Magnetfeldvektor ein. Letztlich berücksichtigt das Modell systematische Kenngrößen der sensorischen Elemente.

In der obigen Darstellung haben die Formelbuchstaben folgende Bedeutung:

$\psi$ Gierwinkel

$\vartheta$ Nickwinkel;
   hier in der statischen Näherung $\vartheta = -c_\vartheta a_l$
      = -Nicksteifigkeit * Längsbeschleunigung

$\varphi$ Wankwinkel;
   hier in der statischen Näherung $\varphi = c_\varphi a_q$
      = Wanksteifigkeit * Querbeschleunigung

$T_\psi$, $T_\vartheta$, $T_\varphi$ sind Kardansche Drehmatrizen, wobei $T_\vartheta$ und $T_\varphi$ bezüglich $\vartheta$ und $\varphi$ linearisiert sind.

Die Magnetisierung ist hier linearisiert durch $\bar{M}$ beschrieben. Der Zusammenhang mit den Matrixelementen $m_{ij}$, wobei i, j = 1, 2, 3 ist, wird durch folgende Gleichung definiert:

5

$$\tilde{M} \;=\; \begin{pmatrix} \tilde{m}_{11} & \tilde{m}_{12} & \tilde{m}_{13} \\ \tilde{m}_{21} & \tilde{m}_{22} & \tilde{m}_{23} \\ \tilde{m}_{31} & \tilde{m}_{32} & \tilde{m}_{33} \end{pmatrix} \;=: \begin{pmatrix} m_{11} & m_{12} & m_{13} \\ m_{21} & m_{22} & m_{23} \\ m_{31} & m_{32} & m_{33} \end{pmatrix}^{-1}$$

Dabei beschreibt $\tilde{m}_{ij}$ die Proportionalitätskonstante zwischen Magnetisierung in Richtung i und äußerem Magnetfeld in Richtung j. Bei der Indizierung steht 1 für x, 2 für y und 3 für z.

Der Vektor

$$\cdot \begin{pmatrix} B_x^{const} \\ B_y^{const} \\ B_z^{const} \end{pmatrix}$$

beschreibt in einem fahrzeugfesten

Bezugssystem den konstanten Anteil des Magnetfeldes am Meßort.

Der Vektor

$$\cdot \begin{pmatrix} B_x^{Kfz} \\ B_y^{Kfz} \\ B_z^{Kfz} \end{pmatrix}$$

erfaßt den Einfluß der Fahrzeugdynamik auf die Magnetfeldmessung. Der Vektor

$$\begin{pmatrix} B_x' \\ B_y' \\ B_z' \end{pmatrix}$$

kennzeichnet den Einfluß durch weichmagnetische Eisenteile des Fahrzeugs auf die Magnetfeldmessung.

Die Parameter $p_1$ bis $p_8$ werden dadurch bestimmbar, daß man aus der Theorie weiß, daß die transformierten Magnetfelddaten ($B_x^{ideal}$, $B_y^{ideal}$) auf einem Einheitskreis liegen müssen. Deshalb bildet man eine Kostenfunktion K, die die Abweichung der transformierten Magnetfelddaten vom Einheitskreis zu minimieren sucht, wodurch die freien Parameter bestimmt werden.

Liegen 2*N Meßwerte ($B_x^{UDS}[i]$, $B_y^{UDS}[i]$) mit i = 1, ..., N vor, so ergibt sich aus den zuvor transformierten Magnetfelddaten die Kostenfunktion K zu:

$$K(p_1, \ldots, p_8) := \sum_{i=1}^{N} K_i(p_1, \ldots, p_8) := \sum_{i=1}^{N} \left( \left\{ B_x^{ideal}[i] \right\}^2 + \left\{ B_y^{ideal}[i] \right\}^2 - 1 \right)^2$$

Soll die Berechnung des Gierwinkels ψ online im Fahrzeug in einem dort installierten Datenerfassungsgerät erfolgen, so kann die Minimierung der Kostenfunktion beispielsweise durch das folgende stochastische Verfahren erfolgen. Ausgangspunkt ist die Transformation

$$B_x^{ideal}(t) = p_1 \cdot \left(B_x^{UDS}(t) - p_3\right) + p_2 \cdot \left(B_y^{UDS}(t) - p_7\right) - p_4 \cdot a_1(t)$$

$$B_y^{ideal}(t) = p_5 \cdot \left(B_x^{UDS}(t) - p_3\right) + p_6 \cdot \left(B_y^{UDS}(t) - p_7\right) - p_8 \cdot a_q(t)$$

Liegen zur Zeit t die Meßwerte $B_x^{UDS}(t)$, $B_y^{UDS}(t)$ vor, so wird die Kostenfunktion definiert durch:

$$K(t, p_1, \ldots, p_8) := \left(\left\{B_x^{ideal}(t)\right\}^2 + \left\{B_y^{ideal}(t)\right\}^2 - 1\right)^2$$

Dabei sind $B_x^{ideal}$ und $B_y^{ideal}$ nach den vorstehenden Gleichungen berechnet worden.

Die Anpassung der Parameter geschieht nun nach:

$$p_i = p_i - \gamma(k)\,\frac{\partial\,K(t, p_1, \ldots, p_8)}{\partial\,p_i}\;; \qquad \text{für } i = 1, \ldots, 8$$

Dabei bezeichnet $\gamma(k)$ die Lernrate für den k-ten Anpassungsschritt. Diese ist geeignet zu wählen und sollte im Laufe der Anpassung stetig abnehmen.

Soll die Anpassung nach $k_g$ Schritten beendet sein, so führt z.B. die Wahl von $\gamma(k)$: =0,001 · exp(k / kg * ln (0,1)) zu guten Ergebnissen.

Soll eine Restadaptionsfähigkeit des stochastischen Verfahrens und damit des Gesamtverfahrens erhalten bleiben, etwa um Temperaturdriften der Sensoren auszugleichen oder Änderungen in der magnetischen Umgebung noch mit einbeziehen zu können, so sollte die Lernrate einen minimalen Wert nicht unterschreiten.

In dem Fall, daß die Berechnung des Gierwinkels $\psi$ nach einer Übertragung der im Datenerfassungsgerät gespeicherten Daten mit einem PC erfolgt, empfiehlt es sich, die Minimerung der Kostenfunktion K mit einem Gradientenverfahren durchzuführen, die in der Numerik allgemein bekannt sind.

Wenn die Berechnung des Gierwinkels $\psi$ vollständig im Fahrzeug durchgeführt wird, ist es in aller Regel empfehlenswert, dieses Verfahren zyklisch in vorbestimmten zeitlichen Intervallen zu durchlaufen.

Die vorteilhafte Wirkung des erfindungsgemäßen Verfahrens macht sich am deutlichsten in Kurvenfahrten mit starken Wankwinkeländerungen bemerkbar. Durch die Anwendung dieses Verfahrens läßt sich aus den erfindungsgemäß ermittelten Werten des Gierwinkels $\psi$ und unter Zuhilfenahme der vorzugsweise aus der Längsbeschleunigung $a_l$ integrierten Daten der Fahrzeuglängsgeschwindigkeit v auch eine verhältnismäßig stark gekrümmte Bewegungsbahn eines Fahrzeugs sehr genau rekonstruieren.

## Patentansprüche

1. Verfahren zur Bestimmung des Gierwinkels $\psi$ eines Fahrzeugs, wobei in dem Fahrzeug ein Datenerfassungsgerät zur Erfassung von Meßdaten angeordnet ist, wobei die Meßdaten dem Datenerfassungsgerät von Sensoren bereitgestellt werden, die raumfest mit dem Fahrzeug verbunden sind und in einer fahrzeugfesten Ebene Meßdaten sowohl in Fahrtrichtung ($a_l$, $B_x$) als auch quer dazu ($a_q$, $B_y$) erfassen, wobei

   der Gierwinkel $\psi$ aus Beschleunigungsmeßdaten $a_l$ und $a_q$ sowie Magnetfeldmeßdaten $B_x$ und $B_y$ bestimmt wird, wobei die Meßdaten $a_l$, $a_q$, $B_x$ und $B_y$ zusammen mit ihnen überlagerten Störeinflüssen durch die Sensoren detektiert und in dem Datenerfassungsgerät für ihre Auswertung gespeichert werden,

   dadurch gekennzeichnet, daß der Gierwinkel $\psi$ aus den Beschleunigungsmeßdaten $a_l$ und $a_q$ und den Magnetfeldmeßdaten $B_x$ und $B_y$ derart bestimmt wird,

   daß zunächst für einen Datensatz bestehend aus der gleichen Anzahl N Magnetfelddaten und Beschleunigungswerten die jeweils zeitgleich erfaßten Meßdaten $B_x(t)$, $B_y(t)$, $a_l(t)$ und $a_q(t)$ von überlagerten Störeinflüssen dadurch befreit werden, daß die im Fahrzeug erfaßten Meßdaten ($B_x^{UDS}$, $B_y^{UDS}$) wie folgt auf von Störeinflüssen bereinigte Meßdaten ($B_x^{ideal}$, $B_y^{ideal}$) und damit auf einen Einheitskreis transformiert werden:

$$B_x^{ideal}(t) = p_1 \cdot \left(B_x^{UDS}(t) - p_3\right) + p_2 \cdot \left(B_y^{UDS}(t) - p_7\right) - p_4 \cdot a_1(t)$$

$$B_y^{ideal}(t) = p_5 \cdot \left(B_x^{UDS}(t) - p_3\right) + p_6 \cdot \left(B_y^{UDS}(t) - p_7\right) - p_8 \cdot a_q(t)$$

wobei p1, ..., p8 freie Parameter bezeichnen, die derart bestimmt werden, daß die Kostenfunktion

$$K(p_1, \ldots, p_8) := \sum_{i=1}^{N} K_i(p_1, \ldots, p_8)$$
$$:= \sum_{i=1}^{N} \left(\left\{B_x^{ideal}[i]\right\}^2 + \left\{B_y^{ideal}[i]\right\}^2 - 1\right)^2,$$

mit i=1, ..., N
ein Minimum annimmt,
und daß dann der Gierwinkel $\psi$ aus den bereinigten Magnetfelddaten $B_x^{ideal}$ und $B_y^{ideal}$, die mit den derart bestimmten Parametern p1, ..., p8 ermittelt wurden, durch Anwendung der Beziehung

$$\psi = \arctan\left(-B_y^{ideal} / B_x^{ideal}\right)$$

ermittelt wird.

2. Verfahren nach Anspruch 1, dadurch gekennzeichnet, daß es im Fahrzeug mit einem stochastischen Verfahren ausgeführt wird.

**Claims**

1. Method for determining the yaw angle $\psi$ of a vehicle, in which a data acquisition device for the acquisition of measured data is arranged in the vehicle, the measured data being made available to the data acquisition device by sensors which are connected to the vehicle in a space-fixed manner and acquire measured data in a strapped-down plane both in the direction of travel ($a_l$, $B_x$) and transversely thereto ($a_q$, $B_y$), the yaw angle $\psi$ being determined from acceleration measured data $a_l$ and $a_q$ and also magnetic field measured data $B_x$ and $B_y$, the measured data $a_l$, $a_q$, $B_x$ and $B_y$ being detected, together with interfering influences superimposed on them, by the sensors and being stored in the data acquisition device for their evaluation,
characterized in that the yaw angle $\psi$ is determined from the acceleration measured data $a_l$ and $a_q$ and the magnetic field measured data $B_x$ and $B_y$ in such a way
that first, for a data set comprising the same number N of magnetic field data and acceleration values, the measured data $B_x(t)$, $B_y(t)$, $a_l(t)$ and $a_q(t)$, which are in each case acquired at the same time, are freed from superimposed interfering influences by transforming the measured data ($B_x^{UDS}$, $B_y^{UDS}$), acquired in the vehicle, into measured data ($B_x^{ideal}$, $B_y^{ideal}$) freed from interfering influences, and hence into a unit circle, as follows:

$$B_x^{ideal}(t) = p_1 \cdot \left(B_x^{UDS}(t) - p_3\right) + p_2 \cdot \left(B_y^{UDS}(t) - p_7\right) - p_4 \cdot a_1(t)$$

$$B_y^{ideal}(t) = p_5 \cdot \left(B_x^{UDS}(t) - p_3\right) + p_6 \cdot \left(B_y^{UDS}(t) - p_7\right) - p_8 \cdot a_q(t)$$

where p1, ..., p8 denote arbitrary parameters which are determined in such a way that the cost function

$$K(p_1,...,p_8) := \sum_{t=1}^{N} K_i(p_1,...,p_8)$$

$$:= \sum_{i=1}^{N} \left(\left\{B_x^{ideal}[i]\right\}^2 + \left\{B_y^{ideal}[i]\right\}^2 - 1\right)^2,$$

where i=1, ..., N
assumes a minimum,
and that then the yaw angle $\psi$ is ascertained from the corrected magnetic field data $B_x^{ideal}$ and $B_y^{ideal}$, which have been ascertained using the parameters p1, ..., p8 determined in this manner, by employing the relation

$$\psi = \arctan(- B_y^{ideal} / B_x^{ideal}).$$

**2.** Method according to Claim 1, characterized in that it is carried out in the vehicle using a stochastic method.

## Revendications

**1.** Procédé pour la détermination de l'angle de giration $\Psi$ d'un véhicule automobile, un dispositif d'acquisition de données étant prévu dans ledit véhicule automobile pour l'acquisition de données de mesure, lesdites données de mesure étant mises à la disposition dudit dispositif d'acquisition de données par des capteurs qui sont reliés, de manière stationnaire, audit véhicule et qui saisissent, dans un plan fixe du véhicule, des données de mesure, d'une part, dans le sens de la marche ($a_l$, $B_x$) et aussi, d'autre part, transversalement à ce dernier ($a_q$, $B_y$) ledit angle de giration $\Psi$ étant déterminé à partir de données de mesure d'accélération $a_l$ et $a_q$ ainsi que de données de mesure de champ magnétique $B_x$ et $B_y$, lesdites données de mesure $a_l$, $a_q$, $B_x$ et $B_y$ étant détectées, conjointement avec des influences perturbatrices qui leur sont superposées, par les capteurs et mémorisées dans ledit dispositif d'acquisition de données en vue de leur exploitation, caractérisé par le fait que l'angle de giration $\Psi$ sera déterminé à partir des données de mesure d'accélération $a_l$ et $a_q$ et des données de champ magnétique $B_x$ et $B_y$, de telle sorte que, tout d'abord, pour un jeu de données constitué du même nombre N de données de champ magnétique et de valeurs d'accélération, les données de mesure respectivement acquises en même temps $B_x(t)$, $B_y(t)$, $a_l(t)$ et $a_q(t)$ seront débarrassées d'influences perturbatrices superposées par le fait que les données de mesure acquises dans le véhicule ($B_x^{UDS}$, $B_y^{UDS}$) seront transformées, de la manière suivante, sur des données de mesure débarrassées d'influences perturbatrices ($B_x^{idéal}$, $B_y^{idéal}$) et, de ce fait, sur un cercle trigonométrique :

$$B_x^{idéal}(t) = p_1 \cdot (B_x^{UDS}(t) - p_3) + p_2 \cdot (B_y^{UDS}(t) - p_7) - p_4 \cdot a_1(t)$$

$$B_y^{idéal}(t) = p_5 \cdot (B_x^{UDS}(t) - p_3) + p_6 \cdot (B_y^{UDS}(t) - p_7) - p_8 \cdot a_q(t)$$

p1, ..., p8 désignant des paramètres libres qui seront déterminés de telle sorte que la fonction de coût

$$K(p_1, \ldots, p_8) := \sum_{i=1}^{N} K_i(p_1, \ldots, p_8)$$

$$:= \sum_{i=1}^{N} \left( \{ B_x^{\text{idéal}}[i] \}^2 + \{ B_y^{\text{idéal}}[i] \}^2 - 1 \right)^2,$$

avec i=1, ..., N
devient un minimum,
et que, ensuite, l'angle de giration $\Psi$ sera déterminé à partir des données de champ magnétique épurées $B_x^{\text{idéal}}$ et $B_y^{\text{idéal}}$, qui ont été déterminées avec les paramètres ainsi définis p1, ..., p8, par l'application de la relation

$$\psi = \arctan(- B_y^{\text{ideal}} / B_x^{\text{ideal}}).$$

2.  Procédé selon la revendication 1,
    caractérisé par le fait
    qu'il sera exécuté dans le véhicule avec un procédé stochastique.